(19) **Europäisches Patentamt European Patent Office Office européen des brevets**

(11) **EP 4 471 509 B1**

(12) **FASCICULE DE BREVET EUROPEEN**

(45) Date de publication et mention de la délivrance du brevet:
**24.12.2025 Bulletin 2025/52**

(21) Numéro de dépôt: **24165649.5**

(22) Date de dépôt: **22.03.2024**

(51) Classification Internationale des Brevets (IPC):
**G04G 9/00** (2006.01)   **G04G 21/02** (2010.01)

(52) Classification Coopérative des Brevets (CPC):
**G04G 9/007**

(54) **PROCÉDÉ DE VALIDATION D'UNE DÉTECTION DU PASSAGE DE LA LIGNE DE KARMAN PAR UN OBJET PORTABLE PAR UN UTILISATEUR, NOTAMMENT UNE MONTRE**

**VERFAHREN ZUR VALIDIERUNG EINER DETEKTION DES DURCHTRITTS DER KARMANLINIE DURCH EIN TRAGBARES GERÄT, INSBESONDERE EINE UHR**

**METHOD FOR VALIDATING A DETECTION OF THE PASSAGE OF THE KARMAN LINE BY A USER-PORTABLE DEVICE, IN PARTICULAR A WATCH**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **31.05.2023 EP 23176349**

(43) Date de publication de la demande:
**04.12.2024 Bulletin 2024/49**

(73) Titulaire: **ETA SA Manufacture Horlogère Suisse 2540 Grenchen (CH)**

(72) Inventeurs:
• **DARDANELLI, Andréa 2000 Neuchâtel (CH)**
• **CHRISTE, Laurent 2504 Bienne (CH)**
• **DUBOIS, Fabian 2400 Le Locle (CH)**
• **BOVET, Jean-Luc 4500 Solothurn (CH)**

(74) Mandataire: **ICB SA Faubourg de l'Hôpital, 3 2001 Neuchâtel (CH)**

(56) Documents cités:
WO-A1-2021/213640   CH-A2- 711 684
CH-A2- 713 220   US-A- 6 144 619
US-A1- 2005 231 391   US-A1- 2008 130 418

**Description**

Domaine technique de l'invention

L'invention concerne un objet portable par un utilisateur, en particulier une montre, présentant une application spatiale, l'utilisateur étant un astronaute ou autre voyageur dans l'espace au moyen d'une fusée ou d'une navette spatiale (par la suite toutes deux nommées 'fusée'). Plus précisément, l'invention concerne un procédé de validation d'une détection du passage de la ligne de Karman par un tel objet portable muni à cet effet d'un dispositif de détection autonome, le procédé de validation étant mis en œuvre par l'objet portable.

La ligne de Karman définit la limite conventionnelle entre l'atmosphère terrestre et l'espace. En général, il est convenu qu'elle correspond à une altitude de 100 km, mais cette altitude varie selon diverses organisations, notamment entre 85 km et 110 km. La ligne de Karman constitue également la limite à partir de laquelle, pour se maintenir en vol, un engin doit voler sensiblement avec une vitesse orbitale lui permettant de maintenir son orbite autour de la terre.

Arrière-plan technologique

Diverses montres ont été portées par des astronautes lors de missions dans l'espace. Certaines montres portées par des astronautes ont été sélectionnées pour leur robustesse et aussi leur précision, sans présenter de fonctions spécifiques à un vol ou une mission dans l'espace. D'autres montres, notamment du type électronique, permettent des fonctions spécifiques utiles pour des missions dans l'espace. Ces fonctions spécifiques concernent en général la mesure du temps, par exemple pour un compte à rebours et / ou des alarmes.

Le document US2008/130418A1 divulgue une montre électronique comportant des fonctions de type temporisateur, prévues pour être utilisées pas un utilisateur embarqué dans une fusée, lors d'un vol spatial.

Le document WO2021/213640A1 divulgue une montre électronique conçue pour être utilisée pendant des vols spatiaux et capable de calculer et afficher le temps solaire. Le calcul est effectué sur la base de données de géolocalisation de la montre.

Le document CH711684A2 divulgue une montre électronique comportant un accéléromètre et une unité de calcul. La montre est conçue pour déterminer et afficher l'énergie potentielle fournie ou reçue par un utilisateur, lors d'une course, entre un événement initial s'avérant à une première altitude et un événement final s'avérant à une deuxième altitude.

Résumé de l'invention

La présente invention se propose de fournir un procédé de validation d'une détection d'un passage de la ligne de Karman par un objet portable par un utilisateur, en particulier une montre, la détection et la validation étant toutes deux effectuées par l'objet portable sur la base de mesures effectuées par cet objet portable lors d'une phase de détection d'un procédé de détection mis en œuvre par l'objet portable. Ainsi, il est prévu qu'une telle détection se fasse de manière autonome par l'objet portable au cours de la phase de détection du procédé de détection mis en œuvre par cet objet portable, et ne se fasse donc pas au moyen d'une communication en temps réel de l'objet portable avec la fusée ou avec un système extérieur, notamment un ou plusieurs satellites fournissant des informations de position dans l'espace. L'invention concerne également un tel objet portable par un utilisateur.

En particulier, il est prévu que l'objet portable comprenne un dispositif de détection formé par un capteur d'accélération, une base de temps et une unité électronique, ce dispositif de détection étant agencé pour pouvoir, lors d'une phase de détection d'un procédé / d'une méthode de détection mis en œuvre par l'objet portable, mesurer des accélérations de l'objet portable et traiter dans l'unité électronique les mesures d'accélération effectuées, de manière à permettre une détection d'un passage de la ligne de Karman par l'objet portable sur la base de ces mesures d'accélération et, dans une variante avantageuse, d'au moins une valeur de référence prédéterminée ou une valeur de référence calculée en fonction d'un coefficient de correction prédéterminé et d'une altitude sélectionnée par l'utilisateur pour la ligne de Karman dans une plage de valeurs donnée, notamment entre 85 et 110 km. Par 'prédéterminé(e)', on comprend que les données concernées sont enregistrées dans l'objet portable préalablement à la phase de détection du procédé / de la méthode de détection.

Dans un objet portable comme une montre, il n'est pas possible d'incorporer un système de navigation inertiel performant, ayant un capteur d'accélération agencé pour mesurer précisément l'accélération selon trois axes d'un référentiel de cet objet portable et un capteur de vitesse angulaire (gyromètre) agencé pour mesurer précisément la vitesse angulaire selon ces trois axes, qui permette de déterminer précisément la position de l'objet portable dans un référentiel terrestre fixe. De plus, le coût d'un système de navigation inertiel précis est très élevé. Ainsi, dans un mode de réalisation préféré, l'objet portable selon l'invention est conçu pour pouvoir détecter de manière autonome le passage de la ligne de Karman par cet objet portable embarqué dans une fusée d'un type donné, avec comme seuls moyens techniques nécessaires un capteur d'accélération, pouvant mesurer les composantes d'un vecteur d'accélération relatif à l'objet portable dans un référentiel lié à cet objet portable, une mémoire contenant ladite valeur de référence prédéterminée ou ladite valeur de référence calculée et une unité électronique qui est agencée pour traiter les mesures fournies par le capteur d'accélération. Cet objet portable ne nécessite ainsi, pour la détection d'un passage de la ligne de Karman par cet objet portable, aucun gyromètre qui peut certes être miniature, formé par un microsystème électromécanique (en anglais nommé aussi par l'acronyme 'MEMS'), mais qui est généralement relativement peu précis, en tous cas pas suffisamment précis pour permettre une détection précise de l'évolution de l'orientation d'un référentiel propre audit capteur d'accélération lors d'un vol spatial, de manière à pouvoir déterminer en tout temps entre le décollage et le passage de la ligne de Karman la composante verticale de l'accélération de mouvement de la fusée et ainsi permettre de déterminer son altitude au cours du temps. Ce mode de réalisation préféré s'affranchit donc, pour les mesures nécessaires à la détection d'un passage de ligne Karman, du problème lié aux gyromètres de petites dimensions, lesquels s'avèrent être relativement peu précis et donc incapables de fournir avec une précision suffisante des mesures de vitesse angulaire de l'objet portable permettant de déterminer correctement son orientation instantanée et ensuite l'évolution de sa position dans l'espace, en particulier son altitude, alors qu'un capteur d'accélération 3D de petites dimensions, du même ordre de grandeur, et relativement peu onéreux peut fournir des mesures d'accélération précises selon trois axes.

Dans une variante préférée, la méthode de détection d'un passage de la ligne de Karman prévoit de calculer une distance de comparaison sur la base des normes des vecteurs d'accélération mesurés par le capteur d'accélération, l'unité électronique étant agencée pour pouvoir calculer ces normes et effectuer une double intégration sur le temps de la norme du vecteur d'accélération mesuré périodiquement ou d'une telle norme diminuée avantageusement de l'accélération terrestre dans le cas d'un accéléromètre du type MEMS pour obtenir une distance fictive de comparaison, laquelle est comparée à la valeur de référence prédéterminée ou la valeur de référence calculée mentionnées précédemment. Le capteur d'accélération fournit des vecteurs d'accélération dans un propre référentiel, mais la norme du vecteur d'accélération est indépendante du référentiel, à savoir qu'elle est invariable quelle que soit l'orientation spatiale du référentiel dans lequel ce vecteur d'accélération est donné, de sorte qu'une indétermination de l'orientation du référentiel de mesure pour les mesures de l'accélération ne pose plus aucun problème. Cette variante préférée est très avantageuse car elle permet donc de s'affranchir du fait qu'un référentiel lié à l'objet portable, à savoir le référentiel défini par le capteur d'accélération qui est fixe relativement à l'objet portable, a une orientation, relativement à un référentiel terrestre, qui est variable au cours d'un vol spatial entre la base de lancement de la fusée et la ligne de Karman, notamment du fait que la fusée ne suit pas une trajectoire linéaire verticale. De plus, l'orientation de l'objet portable peut varier au cours du temps relativement à la fusée, par des mouvements de l'utilisateur qui le porte, en particulier dans le cas d'une montre-bracelet.

Au cours du développement de l'objet portable et d'une méthode de détection d'un passage de la ligne de Karman par cet objet portable utilisant à cet effet, comme seules mesures intervenant dans la phase de détection de cette méthode de détection, des mesures périodiques du vecteur d'accélération de l'objet portable et basant les calculs sur les normes des vecteurs d'accélération mesurés, les inventeurs ont réalisé qu'une telle méthode peut conduire, dans certaines situations particulières, à un résultat erroné, à savoir à une détection du passage de la ligne de Karman par l'objet portable alors que cet événement n'a pas eu lieu. On parle dans un tel cas d'un "faux positif ". C'est un problème pour un objet portable, notamment pour une montre qui a pour objectif d'indiquer un événement exceptionnel pour son utilisateur, à savoir un voyage dans l'espace. Ainsi, il est souhaitable de trouver une solution permettant de déterminer la vraisemblance d'une détection, de manière autonome au cours de la phase de détection, du passage de la ligne de Karman par l'objet portable, afin de pouvoir valider ou non une telle détection.

Parmi les situations pouvant conduire à un résultat erroné de la méthode de détection envisagée, en particulier de la variante préférée, il y a notamment une situation où l'objet portable est soumis à une succession de brusques accélérations, par exemple une série de chocs rapprochés. Ceci peut arriver dans plusieurs situations, volontaires ou involontaires, même lors de l'exercice d'un sport comme le tennis, sur court ou sur table, en portant au poignet une montre agencée pour l'application spatiale considérée. D'autres activités, comme la course à pied, peuvent aussi conduire à une détection erronée sans pour autant que la montre portée au poignet de son utilisateur ne subisse de forts chocs. De plus, des vols acrobatiques en avion peuvent aisément donner un "faux positif ", tout comme certaines attractions d'un parc de loisir, lorsque la personne monte dans un engin soumis à de relativement fortes accélérations, comme c'est le cas dans un "grand huit". D'autres situations particulières peuvent aussi conduire à une détection erronée d'un passage de la ligne de Karman dans le cadre qui nous occupe, par exemple si la montre est placée dans un dispositif exerçant une force centripète importante sur un objet introduit dans le dispositif (par exemple une essoreuse à linge ou même un panier à salade). L'invention se propose donc de fournir des moyens permettant de détecter au moins un certain nombre de cas pour lesquels une détection d'un passage de la ligne de Karman est douteuse, peu ou pas vraisemblable, de sorte à pouvoir invalider une telle détection erronée.

Pour répondre au problème susmentionné, l'invention concerne un procédé de validation d'une détection d'un passage de la ligne de Karman, définie par une altitude prédéterminée, par un objet portable par un utilisateur et comprenant un dispositif de détection formé par un capteur d'accélération, une base de temps et une unité électronique, ce dispositif de détection étant agencé pour pouvoir, lors d'une phase de détection d'un procédé de détection d'un passage de la ligne de Karman mis en œuvre par l'objet portable, mesurer des accélérations de l'objet portable et traiter dans l'unité électronique ces mesures d'accélération de manière à permettre une détection d'un passage de la ligne de Karman par l'objet portable sur la base de ces mesures d'accélération et de données enregistrées dans l'objet portable préalablement à la phase de détection du procédé de détection. Le procédé de validation d'une détection du passage de la ligne de Karman exploite des mesures successives effectuées par l'objet portable, au cours de ladite phase de détection du procédé de détection, pour au moins une variable qui est une fonction d'au moins une force s'exerçant sur cet objet portable. Le procédé de validation est effectué par l'unité électronique qui calcule au moins un indice de confiance relatif auxdites mesures successives et qui vérifie ensuite si au moins une condition donnée pour ledit au moins un indice de confiance est remplie, de sorte à valider ou non une détection du passage de la ligne de Karman par l'objet portable.

Dans une variante avantageuse, le capteur d'accélération mesure un vecteur d'accélération propre de l'objet portable dans un référentiel de cette montre. Ladite variable est la norme du vecteur d'accélération propre diminuée de la norme de l'accélération terrestre, le vecteur d'accélération propre de l'objet portable étant égal à la somme vectorielle des forces que subit cet objet portable, excepté la force de gravité, divisée par sa masse.

Dans une variante préférée, l'objet portable comprend en outre un capteur de vitesse angulaire (gyromètre) et un indice de confiance est défini par une fonction donnée sur des mesures de vitesse angulaire effectuées, de préférence périodiquement, par le capteur de vitesse angulaire. Le capteur de vitesse angulaire (gyromètre) est avantageusement formé par un microsystème électromécanique (MEMS).

Brève description des figures

L'invention sera décrite ci-après de manière plus détaillée à l'aide des dessins annexés, donnés à titre d'exemples nullement limitatifs, dans lesquels :

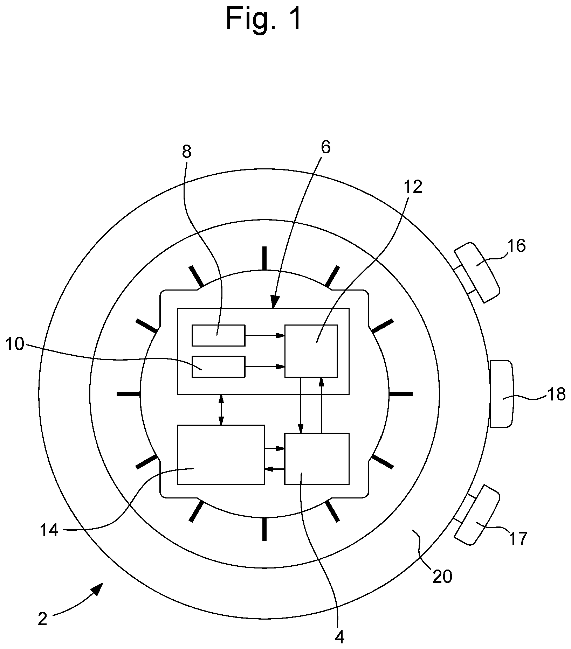

- la Figure 1 représente schématiquement une montre selon un mode de réalisation préféré de l'invention ;

- la Figure 2 représente une trajectoire $T_F(x)$, interrompue sur le dessin, suivie par une fusée, lors d'un vol dans l'espace, entre le décollage et le passage de la ligne de Karman $L_K$, ainsi que diverses variables, relatives au vol le long de cette trajectoire, intervenant dans une méthode avantageuse de détection d'un passage de la ligne de Karman ;

- la Figure 3 montre, de manière agrandie relativement à la Figure 2, une somme vectorielle de diverses accélérations intervenant dans la méthode de détection avantageuse dans laquelle il est prévu de mesurer l'accélération propre de la montre, les axes orthogonaux $X_t$ et $Z_t$ étant parallèles aux axes X et Z de la Figure 2 et ayant leur origine au point P (t) sur la trajectoire $T_F(x)$ de la fusée concernée, ce point $P_S(t)$ définissant une altitude $H_F(t)$ ;

- la Figure 4 montre une courbe théorique de l'accélération de mouvement d'une fusée d'un certain type en fonction du temps ;

- la Figure 5 montre une courbe théorique de l'angle d'inclinaison de ladite fusée au cours du temps ; et

- la Figure 6 montre une courbe théorique de l'altitude de ladite fusée au cours du temps, laquelle définit une durée de vol théorique entre le décollage de ladite fusée jusqu'au passage de la ligne de Karman.

Description détaillée de l'invention

En référence aux figures, on décrira ci-après un mode de réalisation avantageux d'une montre selon l'invention, une méthode avantageuse de détection d'un passage de la ligne de Karman par une montre selon l'invention, et le procédé de validation d'une détection d'un passage de la ligne de Karman selon l'invention.

La montre 2 comprend une mémoire 4, une base de temps et un dispositif de détection et de validation 6, lequel comprend un capteur d'accélération 8, capable de mesurer un vecteur d'accélération de la montre dans un référentiel tridimensionnel lié à la montre, et une unité électronique de traitement 12, nommée aussi 'unité électronique' par la suite, qui est agencée pour pouvoir notamment traiter des mesures fournies par le capteur d'accélération 8. La montre comprend en outre une unité électronique de commande 14, laquelle est agencée pour pouvoir notamment activer le dispositif de détection et de validation 6 en réponse à un actionnement d'un organe de commande externe. Cette montre 2 est munie de divers organes de commande externes, en particulier deux poussoirs 16 et 17 et une tige-couronne 18 agencés sur la boîte 20, à l'extérieur de celle-ci. On notera que la montre peut être munie de moyens de commande tactiles, notamment une glace tactile recouvrant des moyens d'affichage, de tels moyens de commande tactiles étant prévus par exemple pour des entrées de données dans la mémoire 4 de la montre et/ou pour commander l'affichage de certaines données par les moyens d'affichage, en particulier avant et après un vol spatial ou une mission spatiale. Dans une variante particulière, la montre comprend un affichage analogique, formé par des aiguilles associées à une graduation, et un affichage digital formé par un module électronique d'affichage définissant une majeure partie du cadran de la montre.

L'unité électronique 12 est agencée, en association avec le capteur d'accélération 8 et la mémoire 4, pour pouvoir détecter, au moins pour une fusée d'un type donné, un passage de la ligne de Karman $L_K$ par la fusée seulement au moyen de la montre 2 embarquée dans cette fusée. La détection est donc réalisée de manière autonome, au cours d'une phase de détection du procédé de détection mis en œuvre par la montre, par le dispositif de détection qui est compris dans le dispositif de détection et de validation 6 de la montre. La ligne de Karman $L_K$ est définie par une altitude donnée $H_D$ ou une altitude Hs sélectionnable par un utilisateur dans une plage de valeurs donnée, notamment entre 85 et 110 km, directement ou via la sélection d'une autre variable spatiale. Par 'altitude donnée', on comprend une altitude prédéfinie / prédéterminée par le fabricant de la montre ou par une personne ou société autorisée, et non par un utilisateur.

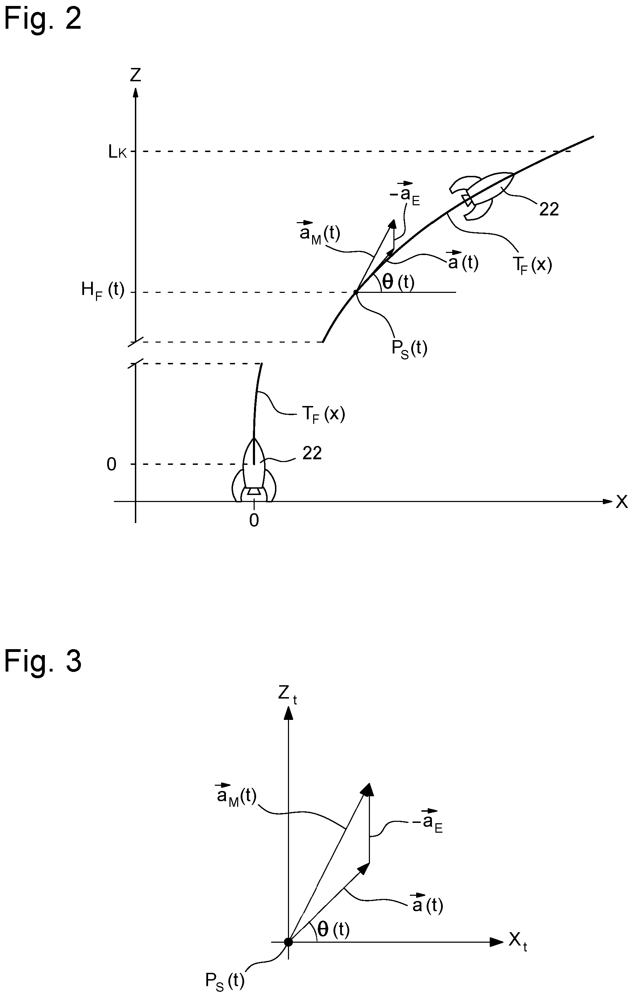

Dans une méthode de détection avantageuse pour la détection du passage de la ligne de Karman $L_K$, définie par une altitude donnée $H_D$ ou par une altitude sélectionnée Hs, par une fusée 22, d'un type donné, au moyen de la montre 2 embarquée dans cette fusée, il est prévu que le capteur d'accélération 8 est agencé pour mesurer un vecteur d'accélération propre $a_M^*$ de la montre, dans un référentiel tridimensionnel lié à cette montre, et l'unité électronique 12 est agencée pour pouvoir traiter des mesures fournies par le capteur d'accélération. Le vecteur d'accélération propre $a_M^*$ est égal, en première approximation pour une fusée, à un vecteur d'accélération de mouvement a* de cette montre moins le vecteur de l'accélération terrestre $a_E^*$ en tout instant / en tout temps t. On notera que l'astérisque (*) est utilisé ici pour indiquer un vecteur, alors qu'aux Figures 2 et 3 les vecteurs sont indiqués, de manière conventionnelle, par des flèches situées au-dessus des variables concernées. Le vecteur d'accélération propre de la montre est égal à une somme vectorielle des forces que subit cette montre, excepté la force de gravité, divisée par sa masse. En d'autres termes, l'accélération propre d'un objet est l'accélération que subit cet objet pour un observateur en chute libre.

La méthode de détection comprend une phase préliminaire, laquelle est préliminaire à l'embarquement de l'objet portable dans la fusée pour le vol spatial prévu, comprenant les étapes préliminaires suivantes :

A) Fournir une accélération de mouvement nominale $A_N(t)$ pour la fusée 22, en fonction du temps t, depuis un décollage de cette fusée, définissant un temps zéro, au moins jusqu'à un passage par l'altitude donnée $H_D$ pour la ligne de Karman $L_K$, cette accélération de mouvement nominale étant une valeur scalaire (norme d'un vecteur d'accélération de mouvement nominale) dans une unité égale à l'attraction terrestre (cette valeur scalaire sans dimension correspondant donc à la norme du vecteur d'accélération de mouvement nominale divisée par la norme de l'attraction terrestre)

B) Fournir un angle d'inclinaison théorique $\theta_T(t)$ pour la fusée du type donné, relativement à un plan horizontal et en fonction du temps t, depuis le décollage de cette fusée jusqu'à au moins un passage par l'altitude donnée $H_D$.

C) Fournir ou déterminer une durée de vol théorique $T_K$ pour la fusée du type donné entre le décollage de cette fusée jusqu'au passage par l'altitude donnée $H_D$.

D) Sur la base de ladite accélération de mouvement nominale et dudit angle d'inclinaison théorique, déterminer une accélération propre théorique $A_{PT}(t)$, en fonction du temps, pour la fusée du type donné, la valeur de cette accélération propre théorique étant définie, dans une unité égale à l'attraction terrestre, par la formule suivante :

$$A_{PT}(t) = \sqrt{1 + 2 \cdot A_N(t) \cdot \sin \theta_T(t) + A_N^2(t)}$$

E) Calculer, par des moyens numériques et/ou mathématiques, une distance de mesure théorique $D_{MT}$ définie par une double intégrale de l'accélération propre théorique $A_{PT}(t)$, entre le temps zéro (t = 0) correspondant au décollage de la fusée et le temps $T_K$ correspondant à la durée de vol théorique, ou de cette accélération propre théorique diminuée de la norme de l'accélération terrestre ; la distance de mesure théorique $D_{MT}$ divisée par l'altitude donnée $H_D$ pour la ligne de Karman $L_K$ définissant, pour la fusée du type donné, un facteur de correction $F_C$.

F) Enregistrer la distance de mesure théorique $D_{MT}$ et/ou le facteur de correction Fc dans la mémoire de la montre, ce facteur de correction Fc étant ensuite, avant un décollage de la fusée définissant un début dudit vol spatial, multiplié par l'altitude sélectionnée Hs, le cas échéant, de sorte à obtenir une distance de référence $D_{MR}$.

La méthode de détection comprend ensuite une phase de détection comprenant les étapes de détection suivantes :

G) Avant le décollage de la fusée, activer le dispositif de détection de la montre embarquée dans cette fusée.

H) Mesurer périodiquement, à une fréquence de mesure $F_M$, le vecteur d'accélération propre de la montre, dans le référentiel tridimensionnel de cette montre, au moyen dudit dispositif de détection, et calculer dans l'unité électronique, pour chaque mesure, la norme $A_M(t_n)$ du vecteur d'accélération propre mesuré, respectivement une norme corrigée égale à la norme $A_M(t_n)$ diminuée de la norme de l'accélération terrestre, $t_n$ étant un temps égal à $n \cdot P$ où $n$ est un nombre de mesures effectuées au moins depuis le décollage de la fusée, incrémenté d'une unité à chaque nouvelle mesure, et P est la période temporelle définie par la fréquence de mesure.

I) Calculer de manière numérique, dans l'unité électronique, une double intégrale sur le temps, depuis le décollage de la fusée, respectivement au moins depuis le décollage de la fusée, de la norme du vecteur d'accélération propre de la montre, respectivement de cette norme diminuée de la norme de l'accélération terrestre, la norme du vecteur d'accélération propre étant déterminée sur la base desdites normes $A_M(t_n)$ du vecteur d'accélération propre mesuré périodiquement, pour obtenir des distances de comparaison $D_C(t_m)$ pour des temps $t_m$, avec $m$ un nombre entier positif, chaque $m$ correspondant à un dit nombre $n$.

J) Comparer chaque distance de comparaison $D_C(t_m)$ avec la distance de mesure théorique $D_{MT}$ dans le cas d'une altitude donnée $H_D$ ou avec la distance de référence $D_{MR}$ dans le cas d'une altitude sélectionnée $H_S$ et, lorsqu'une distance de comparaison $D_C(t_m)$ est supérieure à la distance de mesure théorique $D_{MT}$, respectivement à la distance de référence $D_{MR}$, enregistrer dans la mémoire de l'objet portable une détection, par le dispositif de détection, du passage de la ligne de Karman par cet objet portable.

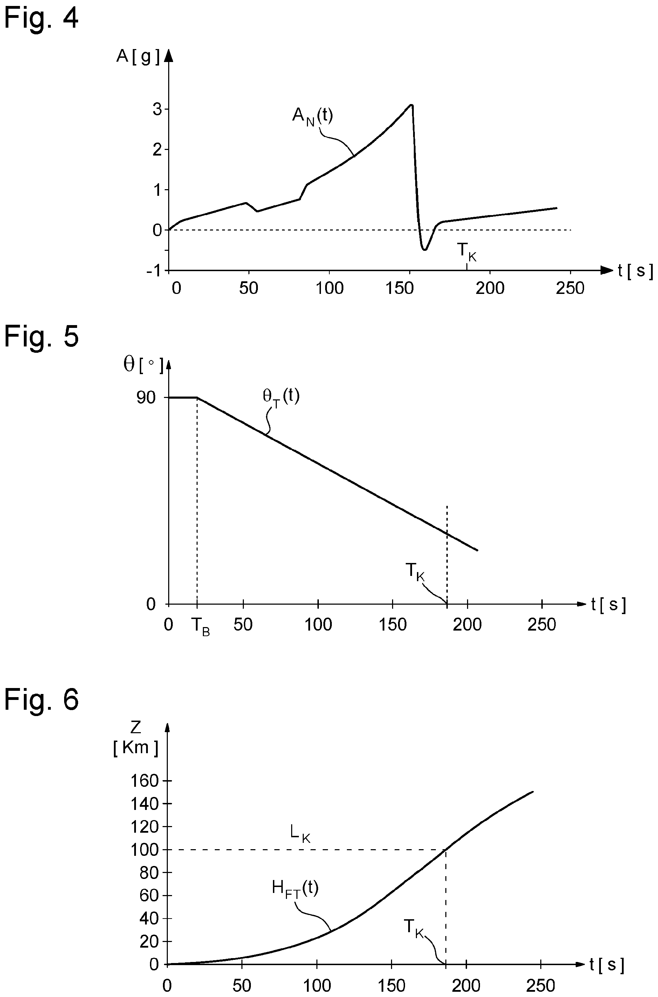

Par 'accélération de mouvement', on comprend une accélération correspondant à la dérivée temporelle de la vitesse, cette accélération de mouvement définissant en tout temps un vecteur tangent à la trajectoire de la fusée, et donc de l'objet portable, dans l'espace, c'est-à-dire un vecteur colinéaire avec le vecteur de direction instantanée de la fusée. Par le terme 'nominale', on comprend une valeur donnée dans la spécification du type de fusée considéré ou pour une certaine fusée ; c'est donc une valeur théorique, ici en fonction du temps, prévue pour la fusée considérée et qui résulte de sa conception et de la planification d'un vol spatial avec une telle fusée, en particulier de son lancement jusqu'au passage de la ligne de Karman dans le cadre de la présente invention.
Dans une variante préférée de la méthode de détection, le capteur d'accélération prévu pour réaliser les mesures du vecteur d'accélération propre de la montre, et donc normalement de la fusée, est un microsystème électromécanique (MEMS) incorporé dans cette montre.
Concernant l'étape A), on notera encore que l'accélération de mouvement théorique $A_N(t)$ peut être momentanément négative, c'est-à-dire que la vitesse de la fusée peut momentanément diminuer, comme montré sur le graphe de la Figure 4. Ainsi, l'accélération de mouvement nominale est fournie avec son signe mathématique et doit être introduite avec ce signe mathématique dans la formule donnée à l'étape D).
Concernant l'étape B) de la méthode de détection, la Figure 5 donne un exemple pour la courbe de l'angle d'inclinaison théorique $\theta_T(t)$ de la fusée concernée en fonction du temps. Jusqu'au temps $T_B$, la fusée suit une direction verticale de sorte que l'angle d'inclinaison théorique $\theta_T(t)$ vaut 90° entre le temps zéro et le temps $T_B$.
La Figure 2 représente un exemple d'une trajectoire $z = T_F(x)$ de la fusée 22 (interrompue sur cette figure pour des questions d'échelle). On remarquera que les exemples donnés aux figures ne limitent nullement les courbes théoriques envisageables, lesquelles sont en général spécifiques pour chaque type de fusée (type de lanceur notamment pour une navette spatiale). L'angle d'inclinaison $\theta(t)$, à un instant $t$, entre la direction de la fusée au temps $t$ et un plan horizontal est défini par la tangente à la trajectoire $z = T_F(x)$ de la fusée à sa position spatiale $P_s(t)$, la variable $x$ étant une fonction du temps.
Concernant l'étape C) relative à la durée de vol théorique $T_K$, il est possible dans une variante simplifiée de l'estimer sur la base d'au moins un vol spatial antérieur avec une fusée du type concerné. Dans une variante avantageuse, il est prévu de déterminer la durée de vol théorique $T_K$ par des moyens mathématiques et numériques en se basant sur l'accélération de mouvement nominale $A_N(t)$ et l'angle d'inclinaison théorique $\theta_T(t)$ de la fusée. A cet effet, on peut effectuer la démarche suivante en définissant une distance théorique $L_T(t)$ parcourue par la fusée en fonction du temps. On peut établir la relation mathématique entre l'altitude théorique $H_{FT}(t)$ de la fusée en vol et la distance théorique $L_T(t)$ parcourue par cette fusée. Une variation infinitésimale / élémentaire de l'altitude théorique $dH_{FT}(t) = dL_T(t) \cdot \sin \theta_T(t)$ où $dH_{FT}(t)$ est une variation infinitésimale / élémentaire de la distance théorique parcourue. D'autre part, la variation $dL_T(t) = V_N(t) \cdot dt$ où $V_N(t)$ est la vitesse nominale de la fusée au temps $t$ et $dt$ est une variation infinitésimale / élémentaire du temps. La vitesse nominale $V_N(t)$ peut être déterminée de manière mathématique et/ou numérique sur la base de l'accélération de mouvement nominale $A_N(t)$, étant donné que la vitesse est égale à l'intégrale de l'accélération sur le temps. On peut donc définir la variation infinitésimale / élémentaire $dH_{FT}(t)$ de l'altitude théorique $H_{FT}(t)$, sur la base des relations mathématiques données ci-avant, en fonction de variables données (nominales / théoriques). On obtient

$$dH_{FT}(t) = V_N(t) \cdot \sin\theta_T(t) \cdot dt \,, \text{ avec } V_N(t) = \int_0^t A_N(t) \cdot dt$$

L'altitude théorique $H_{FT}(t)$ est égale à l'intégrale sur le temps de $dH_{FT}(t)$ effectuée par des moyens mathématiques et/ou numériques. Pour déterminer la durée de vol théorique $T_K$, on résout l'équation $H_{FT}(T) = H_D$, $H_D$ étant l'altitude donnée et T étant la variable.

La Figure 6 donne un exemple pour la courbe de l'altitude théorique $H_{FT}(t)$ en fonction du temps sur la base de la courbe de l'accélération de mouvement nominale $A_N(t)$ donnée à la Figure 4 et de la courbe de l'angle d'inclinaison théorique $\theta_T(t)$ donnée à la Figure 5.

Les étapes D) et E) de la méthode de détection sont remarquables par le fait qu'elles sont conçues pour permettre de déterminer précisément une distance de mesure théorique $D_{MT}$ correspondant à une valeur de référence prédéterminée à laquelle peut être comparée une distance de comparaison calculée ensuite précisément dans l'unité électronique de la montre sur la base des mesures d'accélération propre, fournies par le capteur d'accélération 8 agencé dans la montre, lors d'un vol spatial avec une fusée dans laquelle cette montre est embarquée. Dans le mode de réalisation principal de la montre 2, il est prévu que le dispositif de détection autonome n'utilise comme moyens de mesure, pour la détection d'un passage par la ligne de Karman, qu'un capteur d'accélération agencé pour pouvoir mesurer des vecteurs de l'accélération propre subie par la montre. La méthode prévoit de déterminer au préalable, c'est-à-dire dans une étape préliminaire qui précède le vol spatial concerné, une distance de mesure théorique $D_{MT}$ qui est une distance théorique fictive par le fait qu'elle ne correspond pas à une distance parcourue théoriquement par la fusée entre le sol et la ligne de Karman, mais à une distance théorique qui résulte du fait qu'on mesure une accélération propre de la montre. De plus, étant donné les moyens de mesure limités, il est prévu de fournir une valeur de référence qui ne dépend que de la norme de l'accélération propre dont le vecteur dans un référentiel de la montre 2 est fourni par le capteur d'accélération, avantageusement corrigée de la norme de l'accélération terrestre par une soustraction de celle-ci de la norme de l'accélération propre, et de la trajectoire de la fusée. Il est donc prévu de définir un passage de la ligne de Karman sur la base de la norme de l'accélération propre de la montre et donc normalement de la fusée dans laquelle elle est embarquée.

La méthode de détection prend en compte le fait que la norme du vecteur d'accélération propre, pour une accélération de mouvement donnée, varie en fonction de l'inclinaison de la fusée. En effet, cette norme diminuée de la norme de l'accélération terrestre ne donne pas l'accélération de mouvement de la montre / de la fusée lorsque la fusée n'a pas une direction verticale. Les Figures 2 et 3 exposent, pour une fusée, la relation vectorielle entre l'accélération de mouvement $a^*$, l'accélération propre mesurée $a_M^*$ et l'accélération terrestre $a_E^*$. À la position spatiale Ps (t) de la fusée au temps t d'un vol spatial correspondent un vecteur d'accélération de mouvement $a(t)^*$ et un vecteur d'accélération propre mesuré $a_M(t)^*$, le vecteur d'accélération terrestre $a_E^*$ étant toujours vertical et indépendant de la position spatiale de la fusée. On remarquera que la petite accélération centripète que subit la fusée en s'inclinant progressivement n'est pas prise en compte dans la relation entre l'accélération propre, qui inclut une telle accélération centripète, et l'accélération de mouvement de la fusée, cette accélération centripète étant faible et insignifiante pour une fusée entre le sol et la ligne de Karman.

À l'étape F) est prévu un enregistrement, préalablement à un vol spatial, à savoir avant le départ de la fusée, de la distance de mesure théorique $D_{MT}$ et/ou du facteur de correction Fc dans la mémoire de la montre. Le facteur de correction Fc est utile pour obtenir une distance de référence $D_{MR}$ lorsqu'il est prévu que l'utilisateur puisse fournir à la montre une altitude sélectionnée Hs pour la ligne de Karman, le facteur de correction Fc étant, dans ce cas, multiplié par l'altitude sélectionnée Hs pour la ligne de Karman pour calculer la distance de référence $D_{MR}$. On notera que cette distance de référence $D_{MR}$ est de fait une distance théorique approximative, étant donné l'approximation linéaire qui est faîte ici à partir de la distance de mesure théorique $D_{MT}$, laquelle est déterminée précisément pour l'altitude donnée $H_D$.

Pour les raisons exposées dans le résumé de l'invention, une détection d'un passage de la ligne Karman par une montre, avantageusement agencée pour pouvoir mettre en œuvre la méthode de détection décrite ci-avant, est fiable dans la mesure où le dispositif de détection est activé lors d'un vol spatial, de préférence peu de temps avant un décollage, mais cette méthode de détection présente toutefois un inconvénient majeur déjà mentionné précédemment. En effet, la méthode de détection avantageuse décrite ci-avant est remarquable par le fait qu'elle utilise, pour une détection d'un passage de la ligne de Karman, pour seul capteur un accéléromètre 3D avantageusement du type MEMS, mais une telle détection peut être, dans des circonstances particulières, obtenue de manière erronée.

De manière générale, le procédé de validation d'une détection d'un passage de la ligne de Karman, définie par une altitude prédéterminée, est mis en œuvre par un objet portable par un utilisateur et agencé pour pouvoir, lors d'une phase de détection d'un procédé de détection d'un passage de la ligne de Karman mis en œuvre par l'objet portable, mesurer des accélérations de l'objet portable et traiter dans l'unité électronique ces mesures d'accélération de manière à permettre une détection d'un passage de la ligne de Karman par l'objet portable sur la base de ces mesures d'accélération et de données enregistrées dans cet objet portable préalablement à la phase de détection du procédé de détection. Selon un mode de mise en œuvre général, le procédé de validation d'une détection du passage de la ligne de Karman exploite des mesures successives effectuées par l'objet portable, au cours de ladite phase de détection du procédé de détection, pour au moins une variable qui est une fonction d'au moins une force s'exerçant sur cet objet portable. Le procédé de validation est effectué par l'unité électronique qui calcule au moins un indice de confiance relatif auxdites mesures successives et qui vérifie ensuite si au moins une condition donnée pour ledit au moins un indice de confiance est remplie, de sorte à valider ou non une détection du passage de la ligne de Karman par l'objet portable.

On décrira ci-après trois indices de confiance spécifiques qui permettent de valider ou non une détection d'un passage de la ligne de Karman par la montre via des conditions données, chacune sur au moins un de ces indices de confiance, qui sont vérifiées dans le procédé de validation.

Le premier indice de confiance C1(N) est défini par la fonction suivante :

$$C1(N) = 1 - \frac{1}{N} \sum_{j=1}^{N} \delta(A_j > L1)$$

N étant un nombre de mesures d'accélération effectuées, au cours de la phase de détection du procédé de détection concerné, et $A_j$ étant une valeur de l'accélération fournie par le capteur d'accélération lors d'une $j^{\text{ème}}$ mesure d'accélération ou calculée dans l'unité électronique sur la base de cette $j^{\text{ème}}$ mesure d'accélération, j = 1 à N. La valeur L1 est une limite donnée pour les valeurs d'accélération $A_j$.

La fonction $\delta$ donne la valeur '1' si la condition sur laquelle elle porte est vraie / remplie et la valeur '0' si cette condition est fausse / non remplie. C1(N) a ainsi une valeur située entre '0' et '1'. Plus la valeur de la fonction C1(N) est proche de '1', plus la confiance quant à la détection d'un passage par la ligne de Karman est grande.

Le deuxième indice de confiance C2(N) est défini par la fonction suivante :

$$C2(N) = 1 - \frac{1}{N} \sum_{q=1}^{N} \delta(V_q > L2)$$

N étant un nombre de mesures d'accélération effectuées, au cours de la phase de détection du procédé de détection concerné, et $V_q$ étant une vitesse obtenue par une intégration numérique sur le temps d'une accélération déterminée par lesdites valeurs $A_j$ de j = 1 à q. La valeur L2 est une limite donnée pour ladite vitesse. C2(N) a aussi une valeur située entre '0' et '1'. Plus la valeur de la fonction C2(N) est proche de '1', plus la confiance est grande.

En particulier, on peut effectuer une intégration par incréments pour déterminer la vitesse $V_q$ après q mesures successives effectuées à une fréquence F égale à 1/P. La vitesse $V_q$ est de fait une augmentation de vitesse au cours de l'intervalle de temps q·P dans lequel sont effectuées ces q mesures successives. La vitesse $V_q$ est ainsi donnée par la formule

$$Vq = \sum_{j=1}^{q} A j \cdot P$$

Le troisième indice de confiance C3(M) est défini par la fonction suivante :

$$C3(M) = 1 - \frac{1}{M} \sum_{k=1}^{M} \delta(W_k > L3)$$

M est un nombre de mesures de vitesse angulaires qui sont effectuées par un capteur de vitesse angulaire (gyromètre), incorporé à cet effet dans la montre, au cours de la phase de détection du procédé de détection concerné. $W_k$ est une valeur de la vitesse angulaire fournie par le capteur de vitesse angulaire lors de la $k^{\text{ème}}$ mesure de vitesse angulaire ou calculée sur la base de la $k^{\text{ème}}$ mesure, K = 1 à M. La valeur L3 est une limite donnée pour les valeurs $W_k$. La fonction C3(M) a une valeur située entre '0' et '1'. Plus la valeur de C3(M) est proche de '1', plus la confiance quant à la détection d'un passage par la ligne de Karman est grande.

On notera que, selon trois variantes de base, le procédé de validation selon l'invention porte sur un seul indice de confiance, parmi les trois indices de confiance, et sur une condition donnée respective qui est vérifiée au moins suite à une détection d'un passage de la ligne de Karman par la montre. Dans la variante de base concernant le troisième indice de confiance, un capteur de vitesse angulaire 10 est en outre incorporé dans la montre 2 et associé au dispositif de détection pour former un dispositif de détection et de validation capable de mettre en œuvre ledit procédé de validation. La condition donnée vérifie si le troisième indice de confiance C3(M) est supérieur à une valeur de référence R2 sélectionnée entre '0.5' et '1'. Dans une variante préférée, la valeur de référence R2 est sélectionnée entre '0.7' et '0.9' compris. Dans un cas particulier, la valeur L3 est égale 200 rad/s et la valeur de référence R2 est égale à 0.8.

Dans une variante avantageuse, car plus sûre, le procédé de validation porte sur les premier et deuxième indices de confiance et sur une même condition donnée pour ces premier et deuxième indices de confiance. Dans un cas particulier, ladite même condition donnée est une condition sur la moyenne du premier indice de confiance et du deuxième indice de confiance. Cette même condition vérifie si ladite moyenne est supérieure à une première valeur de référence R1, qui est sélectionnée entre '0.5' et '1'. Dans une variante préférée, la première valeur de référence R1 est sélectionnée entre '0.7' et '0.9' compris. Dans un cas particulier pour une fusée d'un certain type donné, la valeur L1 est égale 20 m/s$^2$, la valeur L2 est égale à 1000 m/s et la valeur de référence R1 est égale à 0.8.

Dans une variante particulière, relative notamment à la méthode de détection avantageuse décrite précédemment, le capteur d'accélération 8 mesure un vecteur d'accélération propre de l'objet portable dans un référentiel de cette montre et ladite valeur $A_j$ de l'accélération est la norme du vecteur d'accélération propre diminuée de la norme de l'accélération terrestre, ce vecteur d'accélération propre étant obtenu lors de la j$^{ème}$ mesure de l'accélération. On rappellera que le vecteur d'accélération propre de la montre est égal à la somme vectorielle des forces que subit cette montre, excepté la force de gravité, divisée par sa masse. Le capteur d'accélération est formé dans ce cas par un microsystème électromécanique (MEMS).

Dans une variante avantageuse, le procédé de validation concerne les trois indices de confiance et au moins une condition donnée relative(s) aux trois indices de confiance. Dans une variante préférée, le procédé de validation concerne les trois indices de confiance et fournit une première condition donnée relative aux premier et deuxième indices de confiance et une deuxième condition donnée relative au troisième indice de confiance. Ainsi, une validation d'une détection d'un passage de la ligne de Karman est obtenue dans la mesure où les deux conditions données sont remplies. Dans un cas particulier, la première condition est identique à la condition sur la moyenne des premier et deuxième indices de confiance, donnée précédemment, et la deuxième condition est identique à celle pour la variante de base concernant le troisième indice de confiance aussi donnée précédemment. Cette variante préférée permet d'écarter des résultats erronés ('faux positifs') dans toutes les situations particulières énumérées dans le résumé de l'invention.

Dans une variante préférée, le capteur de vitesse angulaire est formé par un microsystème électromécanique (MEMS). On a exposé dans le résumé de l'invention que les capteurs de vitesse angulaire du type MEMS manquent de précision et ne sont pas appropriés pour détecter correctement un passage de la ligne de Karman. La présente invention n'ignore pas ce fait mais les inventeurs ont constaté que de tels capteurs de vitesse angulaire peuvent toutefois fournir des données suffisamment précises pour être exploitées dans le cadre d'un procédé de validation d'une détection d'un passage de la ligne de Karman selon l'invention. Ainsi, il est prévu de détecter un passage de la ligne de Karman sans utiliser de mesures d'un gyromètre, mais ensuite de valider ou non une telle détection en utilisant des mesures d'un gyromètre dont la précision est peu importante pour pouvoir valider une telle détection en éliminant des détections erronées ('faux positifs') dans des situations où interviennent une force centripète relativement importante.

L'invention porte également sur un objet portable par un utilisateur, notamment une montre 2, qui comprend un dispositif de détection formé par un capteur d'accélération 8, une base de temps et une unité électronique 12, ce dispositif de détection étant agencé pour pouvoir mesurer, de préférence périodiquement, des accélérations de cet objet portable au moyen du capteur d'accélération. Le dispositif de détection est agencé pour pouvoir détecter de manière autonome, au cours d'un vol spatial d'une fusée, un passage de la ligne de Karman, définie par une altitude prédéterminée, par l'objet portable en traitant dans l'unité électronique au moins les mesures d'accélération effectuées au cours de ce vol spatial. Ensuite, le dispositif de détection fait partie d'un dispositif de détection et de validation 6 qui est en outre agencé de manière à pouvoir mettre en œuvre le procédé de validation d'une détection d'un passage de la ligne de Karman par l'objet portable selon l'invention.

Dans un mode de réalisation préféré, l'objet portable, notamment la montre 2, est caractérisé en ce qu'il comprend en outre un capteur de vitesse angulaire 10 qui est associé au dispositif de détection pour mettre en œuvre le procédé de validation selon une variante préférée ; et en ce l'unité électronique 12 est agencée de manière à pouvoir mettre en œuvre le procédé de validation d'une détection d'un passage de la ligne de Karman par cet objet portable, procédé de validation dans lequel intervient un indice de confiance relatif à la vitesse angulaire, en particulier le troisième indice de confiance et la condition donnée y relative. Dans le cadre de l'invention, le dispositif de détection est donc complété pour être aussi un dispositif de validation de chaque détection. En effet, le dispositif 6 comprend une partie relative à la détection elle-même d'un passage de la ligne de Karman et une partie relative à la validation d'une telle détection, ces deux parties partageant des moyens matériels, en particulier l'unité électronique. Ainsi, le dispositif 6 est un dispositif de détection d'un passage de la ligne de Karman et de validation de chaque détection. Dans la partie de détection prévue spécifiquement pour la détection d'un passage de la ligne de Karman, aucun capteur de vitesse angulaire n'est prévu et donc utilisé, mais un capteur de vitesse angulaire 10 est prévu avantageusement dans la partie de validation de chaque détection.

Dans une variante avantageuse, le capteur de vitesse angulaire 10 est formé par un microsystème électromécanique (MEMS).

## Revendications

1. Procédé de validation d'une détection d'un passage de la ligne de Karman, définie par une altitude prédéterminée, par un objet portable par un utilisateur et comprenant un dispositif de détection formé par un capteur d'accélération, une base de temps et une unité électronique, ce dispositif de détection étant agencé pour pouvoir, lors d'une phase de détection d'un procédé de détection d'un passage de la ligne de Karman mis en œuvre par l'objet portable, mesurer des accélérations de l'objet portable et traiter dans l'unité électronique ces mesures d'accélération de manière à permettre une détection d'un passage de la ligne de Karman par l'objet portable sur la base de ces mesures d'accélération et de données enregistrées dans l'objet portable préalablement à la phase de détection du procédé de détection ; le procédé de validation d'une détection du passage de la ligne de Karman exploitant des mesures successives effectuées par l'objet portable, au cours de ladite phase de détection du procédé de détection, pour au moins une variable qui est une fonction d'au moins une force s'exerçant sur cet objet portable ; le procédé de validation étant effectué par l'unité électronique qui calcule au moins un indice de confiance relatif auxdites mesures successives et qui vérifie ensuite si au moins une condition donnée pour ledit au moins un indice de confiance est remplie, de sorte à valider ou non une détection du passage de la ligne de Karman par l'objet portable.

2. Procédé de validation selon la revendication 1, **caractérisé en ce que** ledit indice de confiance est défini par la fonction suivante :

$$C1(N) = 1 - \frac{1}{N}\sum_{j=1}^{N}\delta(A_j > L1)$$

N étant un nombre de dites mesures d'accélération effectuées, C1(N) étant l'indice de confiance pour les N mesures, $A_j$ étant une valeur de l'accélération fournie par le capteur d'accélération lors d'une $j^{ème}$ mesure d'accélération ou calculée dans l'unité électronique sur la base de cette $j^{ème}$ mesure d'accélération, j = 1 à **N,** la valeur L1 étant une limite donnée pour lesdites valeurs d'accélération $A_j$, et la fonction $\delta$ donnant la valeur '1' si la condition sur laquelle elle porte est vraie et la valeur '0' si cette condition est fausse, C1(N) ayant ainsi une valeur située entre '0' et '1'.

3. Procédé de validation selon la revendication 2, dans lequel ledit indice de confiance est un premier indice de confiance, ladite fonction est une première fonction et ladite condition donnée est une première condition ; **caractérisé en ce que** l'unité électronique calcule en outre un deuxième indice de confiance qui est défini par une deuxième fonction donnée sur lesdites mesures d'accélération et qui vérifie la première condition donnée, dans le cas où celle-ci est également relative au deuxième indice de confiance, ou une deuxième condition donnée dans le cas contraire, de sorte à valider ou non une détection du passage de la ligne de Karman par l'objet portable ; et **en ce que** le deuxième indice de confiance est défini par la fonction suivante :

$$C2(N) = 1 - \frac{1}{N}\sum_{q=1}^{N}\delta(V_q > L2)$$

C2(N) étant le deuxième indice de confiance, pour N mesures d'accélération effectuées, dont la valeur est située entre '0' et '1', $V_q$ étant une vitesse obtenue par une intégration numérique sur le temps d'une accélération déterminée par lesdites valeurs $A_j$ de j = 1 à q, et la valeur L2 étant une limite donnée pour ladite vitesse.

4. Procédé de validation selon la revendication 3, **caractérisé en ce que** ladite première condition donnée porte sur le premier indice de confiance et le deuxième indice de confiance, cette première condition donnée étant vérifiée au moins lorsque le traitement des mesures d'accélération, effectué par l'unité électronique, donne pour résultat, après $N_K$ mesures d'accélération effectuées, un passage de l'objet portable par la ligne de Karman, de sorte à valider ou non ce résultat, ladite première condition étant une condition sur la moyenne des premier et deuxième indices de confiance et cette condition étant remplie si cette moyenne est supérieure à une première valeur de référence R1, qui est sélectionnée entre '0.5' et '1', de préférence entre '0.7' et '0.9' compris.

5. Procédé de validation selon une quelconque des revendications 2 à 4, **caractérisé en ce que** le capteur d'accélération mesure un vecteur d'accélération propre de l'objet portable dans un référentiel de cette montre, ladite valeur $A_j$ de l'accélération étant la norme du vecteur d'accélération propre, obtenu lors de la $j^{ème}$ mesure de l'accélération, diminuée de la norme de l'accélération terrestre, le vecteur d'accélération propre de l'objet portable étant égal à la somme vectorielle des forces que subit cet objet portable, excepté la force de gravité, divisée par sa masse.

6. Procédé de validation selon la revendication 5, **caractérisé en ce que** le capteur d'accélération est formé par un microsystème électromécanique (MEMS).

7. Procédé de validation selon la revendication 1, **caractérisé en ce que** l'objet portable comprend en outre un capteur de vitesse angulaire ; et **en ce que** ledit indice de confiance est défini par une fonction donnée sur des mesures de vitesse angulaire effectuées, de préférence périodiquement, par le capteur de vitesse angulaire au cours de ladite phase de détection du procédé de détection.

8. Procédé de validation selon la revendication 7, **caractérisé en ce que** ledit indice de confiance est défini par la fonction suivante :

$$C3(M) = 1 - \frac{1}{M}\sum_{k=1}^{M}\delta(W_k > L3)$$

C3(M) étant l'indice de confiance, pour M mesures de vitesse angulaires effectuées, $W_k$ étant une valeur de la vitesse angulaire fournie par le capteur de vitesse angulaire lors de la $k^{ème}$ mesure de vitesse angulaire ou calculée dans l'unité électronique sur la base de cette $k^{ème}$ mesure, K = 1 à **M,** la valeur L3 étant une limite donnée pour les valeurs $W_k$, et la fonction $\delta$ donnant la valeur '1' si la condition sur laquelle elle porte est vraie et la valeur '0' si cette condition est fausse, C3(M) ayant ainsi une valeur située entre '0' et '1'.

9. Procédé de validation selon la revendication 8, **caractérisé en ce que** ladite condition donnée est remplie si ledit indice de confiance est supérieur à une valeur de référence R2, qui est sélectionnée entre '0.5' et '1', de préférence entre '0.7' et '0.9' compris.

10. Procédé de validation selon une quelconque des revendications 2 à 6, **caractérisé en ce que** l'objet portable comprend en outre un capteur de vitesse angulaire ; et **en ce que** le procédé de validation calcule un autre indice de confiance, défini par une fonction donnée sur des mesures de vitesse angulaire effectuées, de préférence périodiquement, par le capteur de vitesse angulaire au cours de ladite phase de détection dudit procédé de détection du passage de la ligne de Karman, et vérifiant au moins une condition donnée pour l'autre indice de confiance, de sorte à valider ou non une détection du passage de la ligne de Karman par l'objet portable.

11. Procédé de validation selon la revendication 10, **caractérisé en ce que** ledit autre indice de confiance est défini par la fonction suivante :

$$C3(M) = 1 - \frac{1}{M}\sum_{k=1}^{M}\delta(W_k > L3)$$

C3(M) étant l'autre indice de confiance, pour M mesures de vitesse angulaires effectuées, $W_k$ étant une valeur de vitesse angulaire fournie par le capteur de vitesse angulaire lors de la $k^{ème}$ mesure de vitesse angulaire ou calculée dans l'unité électronique sur la base de cette $k^{ème}$ mesure, K = 1 à M, la valeur L3 étant une limite donnée pour les

valeurs $W_k$, et la fonction $\delta$ donnant la valeur '1' si la condition sur laquelle elle porte est vraie et la valeur '0' si cette condition est fausse, C3(M) ayant ainsi une valeur située entre '0' et '1'.

12. Procédé de validation selon la revendication 11, **caractérisé en ce que** la condition donnée pour ledit autre indice de confiance est remplie si cet autre indice de confiance est supérieur à une deuxième valeur de référence R2, qui est sélectionnée entre '0.5' et '1', de préférence entre '0.7' et '0.9' compris.

13. Procédé de validation selon une quelconque des revendications 7 à 12, **caractérisé en ce que** le capteur de vitesse angulaire est formé par un microsystème électromécanique (MEMS).

14. Objet portable (2) portable par un utilisateur et comprenant un dispositif de détection formé par un capteur d'accélération (8), une base de temps et une unité électronique (12), ce dispositif de détection étant agencé pour pouvoir mesurer, de préférence périodiquement, des accélérations de cet objet portable au moyen du capteur d'accélération (8) ; **caractérisé en ce que** le dispositif de détection est agencé pour pouvoir détecter de manière autonome, au cours d'un vol spatial d'une fusée, un passage de la ligne de Karman, définie par une altitude prédéterminée, par l'objet portable en traitant dans l'unité électronique au moins les mesures d'accélération effectuées au cours de ce vol spatial ; et **en ce que** le dispositif de détection fait partie d'un dispositif de détection et de validation (6) qui est en outre agencé de manière à pouvoir mettre en œuvre le procédé de validation d'une détection d'un passage de la ligne de Karman par l'objet portable selon une quelconque des revendications 1 à 5.

15. Objet portable (2) selon la revendication 14, **caractérisé en ce que** le capteur d'accélération (8) est formé par un microsystème électromécanique (MEMS).

16. Objet portable (2) selon la revendication 14 ou 15, **caractérisé en ce que** le dispositif de détection et de validation (6) comprend en outre un capteur de vitesse angulaire (10) ; et en ce l'unité électronique (12) est agencée de manière à pouvoir mettre en œuvre le procédé de validation d'une détection d'un passage de la ligne de Karman par l'objet portable selon une quelconque des revendications 7 à 12.

17. Objet portable (2) selon la revendication 16, **caractérisé en ce que** le capteur de vitesse angulaire (10) est formé par un microsystème électromécanique (MEMS).

18. Objet portable (2) selon une quelconque des revendications 14 à 17, **caractérisé en ce que** l'objet portable est une montre (2).

**Patentansprüche**

1. Verfahren zur Validierung einer Detektion des Überschreitens der Kármán-Linie, die durch eine vorbestimmte Höhe definiert ist, mittels eines vom Benutzer tragbaren Geräts, das eine Detektionsvorrichtung umfasst, gebildet durch einen Beschleunigungssensor, eine Zeitbasis und eine elektronische Einheit, wobei die Detektionsvorrichtung derart eingerichtet ist, dass sie während einer Detektionsphase eines durch das tragbare Gerät ausgeführten Verfahrens zur Detektion des Überschreitens der Kármán-Linie die Beschleunigungen des tragbaren Geräts misst und diese Beschleunigungsmessungen in der elektronischen Einheit so verarbeitet, dass eine Detektion des Überschreitens der Kármán-Linie durch das tragbare Gerät auf der Grundlage dieser Beschleunigungsmessungen und von im tragbaren Gerät vor der Detektionsphase des Detektionsverfahrens gespeicherten Daten ermöglicht wird; wobei das Validierungsverfahren sukzessive, während der genannten Detektionsphase des Detektionsverfahrens, durch das tragbare Gerät durchgeführte Messungen für mindestens eine Variable ausnutzt, die eine Funktion von zumindest einer auf dieses tragbare Gerät wirkenden Kraft ist; wobei das Validierungsverfahren von der elektronischen Einheit ausgeführt wird, die mindestens einen Vertrauensindex in Bezug auf die genannten sukzessiven Messungen berechnet und anschließend prüft, ob mindestens eine für den genannten mindestens einen Vertrauensindex vorgegebene Bedingung erfüllt ist, um die Detektion des Überschreitens der Kármán-Linie durch das tragbare Gerät zu validieren oder nicht zu validieren.

2. Validierungsverfahren nach Anspruch 1, **dadurch gekennzeichnet, dass** der genannte Vertrauensindex durch folgende Funktion definiert ist:

$$C1(N) = 1 - \frac{1}{N}\sum_{j=1}^{N}\delta(A_j > L1)$$

wobei N die Anzahl der genannten durchgeführten Beschleunigungsmessungen ist, C1(N) der Vertrauensindex für die N Messungen ist, Aj ein vom Beschleunigungssensor bei einer $j^{\text{ème}}$ Beschleunigungsmessung gelieferter oder in der elektronischen Einheit auf der Grundlage dieser $j^{\text{ème}}$ Beschleunigungsmessung berechneter Beschleunigungswert ist, j = 1 bis **N,** der Wert L1 eine vorgegebene Grenze für die genannten Beschleunigungswerte Aj ist, und die Funktion $\delta$ den Wert "1" liefert, wenn die Bedingung, auf die sie sich bezieht, wahr ist, und den Wert "0", wenn diese Bedingung falsch ist, sodass C1(N) einen Wert zwischen "0" und "1" annimmt.

3. Validierungsverfahren nach Anspruch 2, wobei der genannte Vertrauensindex ein erster Vertrauensindex ist, die genannte Funktion eine erste Funktion ist und die genannte vorgegebene Bedingung eine erste Bedingung ist; **dadurch gekennzeichnet, dass** die elektronische Einheit ferner einen zweiten Vertrauensindex berechnet, der durch eine zweite, auf die genannten Beschleunigungsmessungen angewandte Funktion definiert ist, und die erste vorgegebene Bedingung prüft, sofern sich diese ebenfalls auf den zweiten Vertrauensindex bezieht, oder andernfalls eine zweite vorgegebene Bedingung, um die Detektion des Überschreitens der Kármán-Linie durch das tragbare Gerät zu validieren oder nicht zu validieren; und dass der zweite Vertrauensindex durch die folgende Funktion definiert ist:

$$C2(N) = 1 - \frac{1}{N}\sum_{q=1}^{N}\delta(V_q > L2)$$

wobei C2(N) der zweite Vertrauensindex für N durchgeführte Beschleunigungsmessungen ist und einen Wert zwischen "0" und "1" annimmt, wobei $V_q$ eine Geschwindigkeit ist, die durch eine numerische Integration über die Zeit einer durch die genannten Werte Aj für j = 1 bis q bestimmten Beschleunigung erhalten wird, und der Wert L2 eine vorgegebene Grenze für die genannte Geschwindigkeit darstellt.

4. Validierungsverfahren nach Anspruch 3, **dadurch gekennzeichnet, dass** die genannte erste Bedingung den ersten Vertrauensindex und den zweiten Vertrauensindex betrifft, wobei diese erste Bedingung zumindest dann überprüft wird, wenn die von der elektronischen Einheit durchgeführte Verarbeitung der Beschleunigungsmessungen nach $N_K$ durchgeführten Beschleunigungsmessungen zu einem Überschreiten der Kármán-Linie durch das tragbare Gerät führt, um dieses Ergebnis zu validieren oder nicht zu validieren; wobei die genannte erste Bedingung eine Bedingung in Bezug auf den Mittelwert des ersten und des zweiten Vertrauensindex ist und diese Bedingung erfüllt ist, wenn dieser Mittelwert einen ersten Referenzwert R1 überschreitet, der zwischen "0,5" und "1" ausgewählt ist, vorzugsweise zwischen "0,7" und "0,9" (einschließlich).

5. Validierungsverfahren nach einem der Ansprüche 2 bis 4, **dadurch gekennzeichnet, dass** der Beschleunigungssensor einen spezifischen Beschleunigungsvektor des tragbaren Gerätes im Bezugssystem dieser Uhr misst, wobei der Wert Aj der Beschleunigung der Betrag des spezifischen Beschleunigungsvektors ist, der bei der $j^{\text{ème}}$ Messung der Beschleunigung erhalten wird, vermindert um den Betrag der Erdbeschleunigung, wobei der spezifische Beschleunigungsvektor des tragbaren Geräts der Vektorsumme der auf dieses tragbare Gerät einwirkenden Kräfte, mit Ausnahme der Schwerkraft, geteilt durch seine Masse, entspricht.

6. Validierungsverfahren nach Anspruch 5, **dadurch gekennzeichnet, dass** der Beschleunigungssensor als mikroelektromechanisches System (MEMS) ausgebildet ist.

7. Validierungsverfahren nach Anspruch 1, **dadurch gekennzeichnet, dass** das tragbare Objekt ferner einen Winkelgeschwindigkeitssensor umfasst; und dass der genannte Vertrauensindex durch eine vorgegebene Funktion über während der genannten Detektionsphase des Detektionsverfahrens vom Winkelgeschwindigkeitssensor durchgeführte, vorzugsweise periodische, Winkelgeschwindigkeitsmessungen definiert ist.

8. Validierungsverfahren nach Anspruch 7, **dadurch gekennzeichnet, dass** der genannte Vertrauensindex durch folgende Funktion definiert ist:

$$C3(M) = 1 - \frac{1}{M}\sum_{k=1}^{M}\delta(W_k > L3)$$

C3(M) ist der Vertrauensindex für M durchgeführte Winkelgeschwindigkeitsmessungen, wobei $W_k$ ein Wert der Winkelgeschwindigkeit ist, der vom Drehratensensor bei der $k^{ème}$ Winkelgeschwindigkeitsmessung liefert oder in der elektronischen Einheit auf der Grundlage dieser $k^{ème}$ Messung berechnet wird, K = 1 bis M, wobei der Wert L3 eine vorgegebene Grenze für die Werte $W_k$ darstellt und die Funktion $\delta$ den Wert "1" liefert, wenn die Bedingung, auf die sie sich bezieht, wahr ist, und den Wert "0", wenn diese Bedingung falsch ist, sodass C3(M) einen Wert zwischen "0" und "1" annimmt.

9. Validierungsverfahren nach Anspruch 8, **dadurch gekennzeichnet, dass** die genannte Bedingung erfüllt ist, wenn der genannte Vertrauensindex größer ist als ein Referenzwert R2, der zwischen "0,5" und "1" ausgewählt ist, vorzugsweise zwischen "0,7" und "0,9" (einschließlich).

10. Validierungsverfahren nach einem der Ansprüche 2 bis 6, **dadurch gekennzeichnet, dass** das tragbare Gerät ferner einen Winkelgeschwindigkeitssensor umfasst; und dass das Validierungsverfahren einen weiteren Vertrauensindex berechnet, der durch eine vorgegebene Funktion über vom Winkelgeschwindigkeitssensor während der genannten Detektionsphase des genannten Verfahrens zur Detektion des Überschreitens der Kármán-Linie durchgeführte, vorzugsweise periodische, Winkelgeschwindigkeitsmessungen definiert ist, und mindestens eine vorgegebene Bedingung für den weiteren Vertrauensindex überprüft, um die Detektion des Überschreitens der Kármán-Linie durch das tragbare Gerät zu validieren oder nicht zu validieren.

11. Validierungsverfahren nach Anspruch 10, **dadurch gekennzeichnet, dass** der genannte weitere Vertrauensindex durch folgende Funktion definiert ist:

$$C3(M) = 1 - \frac{1}{M}\sum_{k=1}^{M}\delta(W_k > L3)$$

wobei C3(M) der weitere Vertrauensindex für M durchgeführte Winkelgeschwindigkeitsmessungen ist, $W_k$ ein Winkelgeschwindigkeitswert ist, der vom Drehratensensor bei der $k^{ème}$ Winkelgeschwindigkeitsmessung geliefert oder in der elektronischen Einheit auf der Grundlage dieser $k^{ème}$ Messung berechnet wird, K = 1 bis M, der Wert L3 eine vorgegebene Grenze für die Werte $W_k$ darstellt und die Funktion $\delta$ den Wert "1" liefert, wenn die Bedingung, auf die sie sich bezieht, wahr ist, und den Wert "0", wenn diese Bedingung falsch ist, sodass C3(M) einen Wert zwischen "0" und "1" annimmt.

12. Validierungsverfahren nach Anspruch 11, **dadurch gekennzeichnet, dass** die für den genannten weiteren Vertrauensindex vorgegebene Bedingung erfüllt ist, wenn dieser weitere Vertrauensindex größer ist als ein zweiter Referenzwert R2, der zwischen "0,5" und "1" ausgewählt ist, vorzugsweise zwischen "0,7" und "0,9" (einschließlich).

13. Validierungsverfahren nach einem der Ansprüche 7 bis 12, **dadurch gekennzeichnet, dass** der Winkelgeschwindigkeitssensor als mikroelektromechanisches System (MEMS) ausgebildet ist.

14. Tragbares Gerät (2), von einem Benutzer tragbar, umfassend eine Detektionsvorrichtung, gebildet durch einen Beschleunigungssensor (8), eine Zeitbasis und eine elektronische Einheit (12), wobei die Detektionsvorrichtung derart eingerichtet ist, mittels des Beschleunigungssensors (8) Beschleunigungen dieses tragbaren Geräts vorzugsweise periodisch zu messen; **dadurch gekennzeichnet, dass** die Detektionsvorrichtung derart eingerichtet ist, während eines Raumflugs einer Rakete autonom ein Überschreiten der Kármán-Linie, definiert durch eine vorbestimmte Höhe, durch das tragbare Gerät zu detektieren, indem in der elektronischen Einheit zumindest die während dieses Raumflugs durchgeführten Beschleunigungsmessungen verarbeitet werden; und dass die Detektionsvorrichtung Teil einer Detektions- und Validierungsvorrichtung (6) ist, die ferner derart eingerichtet ist, das Verfahren zur Validierung einer Detektion eines Überschreitens der Kármán-Linie durch das tragbare Gerät nach einem der Ansprüche 1 bis 5 auszuführen.

**15.** Tragbares Gerät (2) nach Anspruch 14, **dadurch gekennzeichnet, dass** der Beschleunigungssensor (8) als mikroelektromechanisches System (MEMS) ausgebildet ist.

**16.** Tragbares Gerät (2) nach Anspruch 14 oder 15, **dadurch gekennzeichnet, dass** die Detektions- und Validierungsvorrichtung (6) ferner einen Winkelgeschwindigkeitssensor (10) umfasst; und dass die elektronische Einheit (12) derart eingerichtet ist, das Verfahren zur Validierung einer Detektion eines Überschreitens der Kármán-Linie durch das tragbare Gerät nach einem der Ansprüche 7 bis 12 auszuführen.

**17.** Tragbares Gerät (2) nach Anspruch 16, **dadurch gekennzeichnet, dass** der Winkelgeschwindigkeitssensor (10) als mikroelektromechanisches System (MEMS) ausgebildet ist.

**18.** Tragbares Gerät (2) nach einem der Ansprüche 14 bis 17, **dadurch gekennzeichnet, dass** das tragbare Gerät eine Uhr (2) ist.

**Claims**

**1.** Method for validating a detection of a crossing of the Kármán line, defined by a predetermined altitude, by an object portable by a user and comprising a detection device formed by an acceleration sensor, a time base and an electronic unit, this detection device being arranged so as to be able, during a detection phase of a method for detecting crossing of the Kármán line implemented by the portable object, to measure accelerations experienced by the portable object and to process, in the electronic unit, these acceleration measurements so as to enable a detection of a crossing of the Kármán line by the portable object on the basis of these acceleration measurements and of data recorded in the portable object prior to the detection phase of the detection method; the method for validating a detection of crossing of the Karman line exploiting successive measurements made by the portable object, during said detection phase of the detection method, for at least one variable which depends on at least one force exerted on this portable object; the validation method being performed by the electronic unit which calculates at least one confidence index relating to said successive measurements which then checks whether at least one condition given for said at least one confidence index is met, so as to validate or not a detection of the crossing of the Karman line by the portable object.

**2.** Validation method according to claim 1, **characterised in that** said confidence index is defined by the following function:

$$C1(N) = 1 - \frac{1}{N} \sum_{j=1}^{N} \delta(A_j > L1)$$

where N is a number of said acceleration measurements carried out, C1(N) is the confidence index for the N measurements, $A_j$ is a value of the acceleration supplied by the acceleration sensor during a $j^{th}$ acceleration measurement or calculated in the electronic unit on the basis of this $j^{th}$ acceleration measurement, where j = 1 to **N**, the value L1 is a given limit for said acceleration values $A_j$, and where the $\delta$ function gives the value '1' if the condition to which it relates is true and the value '0' if this condition is false, with C1(N) thus having a value between '0' and '1'.

**3.** Validation method according to claim 2, wherein said confidence index is a first confidence index, said function is a first function and said given condition is a first condition; **characterised in that** the electronic unit further calculates a second confidence index which is defined by a second function given on said acceleration measurements and which verify the first given condition, in the case where the latter also relates to the second confidence index, or a second given condition in the opposite case, so as to validate or not a detection of the crossing of the Kármán line by the portable object; and **in that** the second confidence index is defined by the following function:

$$C2(N) = 1 - \frac{1}{N} \sum_{q=1}^{N} \delta(V_q > L2)$$

C2(N) being the second confidence index, for N acceleration measurements carried out, the value of which lies between '0' and '1', $V_q$ being a velocity obtained by numerical integration over time of an acceleration determined by said values $A_j$ for j = 1 to q, and the value L2 being a limit given for said velocity.

4. Validation method according to claim 3, **characterised in that** said first given condition relates to the first confidence index and the second confidence index, this first given condition being verified at least when the processing of the acceleration measurements, carried out by the electronic unit, gives as a result, after $N_K$ acceleration measurements have been taken, that the portable object has crossed the Kármán line so as to validate or not this result, said first condition being a condition on the average of the first and second confidence indices and this condition being met if this average is greater than a first reference value R1, which is selected between '0.5' and '1', preferably between '0.7' and '0.9' inclusive.

5. Validation method according to any of claims 2 to 4, **characterised in that** the acceleration sensor measures a proper acceleration vector of the portable object in a coordinate frame of this watch, said value $A_j$ of the acceleration being the norm of the proper acceleration vector, obtained during the $j^{th}$ acceleration measurement, less the norm of the gravitational acceleration, the proper acceleration vector of the portable object being equal to the vector sum of the forces to which this portable object is subjected, except for the force of gravity, divided by its mass.

6. Validation method according to claim 5, **characterised in that** the acceleration sensor is formed by a microelectromechanical system (MEMS).

7. Validation method according to claim 1, **characterised in that** the portable object further comprises an angular velocity sensor; and **in that** said confidence index is defined by a function given on angular velocity measurements made, preferably periodically, by the angular velocity sensor during said detection phase of the detection method.

8. Validation method according to claim 7, **characterised in that** said confidence index is defined by the following function:

$$C3(M) = 1 - \frac{1}{M} \sum_{k=1}^{M} \delta(W_k > L3)$$

where C3(M) is the confidence index, for M angular velocity measurements made, $W_k$ is a value of the angular velocity provided by the angular velocity sensor during the $k^{th}$ angular velocity measurement **or calculated** in the electronic unit on the basis of this $k^{th}$ measurement, where K = 1 to M, the value L3 is a given limit for the values $W_k$, and the function $\delta$ gives the value '1' if the condition to which it relates is true and the value '0' if this condition is false, with C3(M) thus having a value between '0' and '1'.

9. Validation method according to claim 8, **characterised in that** said given condition is satisfied if said confidence index is greater than a reference value R2, which is selected between '0.5' and '1', preferably between '0.7' and '0.9' inclusive.

10. Validation method according to any of claims 2 to 6, **characterised in that** the portable object further comprises an angular velocity sensor; and **in that** the validation method calculates another confidence index, defined by a given function on angular velocity measurements made, preferably periodically, by the angular velocity sensor during said detection phase of said method for detecting crossing of the Kármán line, and verifying at least one condition given for the other confidence index, so as to validate or not a detection of the crossing of the Kármán line by the portable object.

11. Validation method according to claim 10, **characterised in that** said additional confidence index is defined by the following function:

$$C3(M) = 1 - \frac{1}{M} \sum_{k=1}^{M} \delta(W_k > L3)$$

where C3(M) is the additional confidence index, for M angular velocity measurements made, $W_k$ is a value of the angular velocity provided by the angular velocity sensor during the $k^{th}$ angular velocity measurement or calculated in the electronic unit on the basis of this $k^{th}$ measurement, where K = 1 to M, the value L3 is a given limit for the values $W_k$, and the function $\delta$ gives the value '1' if the condition to which it relates is true and the value '0' if this condition is false, with C3(M) thus having a value between '0' and '1'.

12. Validation method according to claim 11, **characterised in that** the given condition for said additional confidence index is satisfied if this additional confidence index is greater than a second reference value R2, which is selected between '0.5' and '1', preferably between '0.7' and '0.9' inclusive.

13. Validation method according to any of claims 7 to 12, **characterised in that** the angular velocity sensor is formed by a microelectromechanical system (MEMS).

14. Portable object (2), portable by a user and comprising a detection device formed by an acceleration sensor (8), a time base and an electronic unit (12), this detection device being arranged to be able to measure, preferably periodically, accelerations of this portable object by means of the acceleration sensor (8); **characterised in that** the detection device is arranged to be able to autonomously detect, during a space flight of a rocket, a crossing of the Karman line, defined by a predetermined altitude, by the portable object by processing, in the electronic unit, at least the acceleration measurements made during this space flight; and **in that** the detection device forms part of a detection and validation device (6) which is also arranged so as to be able to implement the method for validating a detection of a crossing of the Kármán line by the portable object according to any one of claims 1 to 5.

15. Portable object (2) according to claim 14, **characterised in that** the acceleration sensor (8) is formed by a microelectromechanical system (MEMS).

16. Portable object (2) according to claim 14 or 15, **characterised in that** the detection and validation device (6) further comprises an angular velocity sensor (10); and **in that** the electronic unit (12) is arranged so as to be able to implement the method for validating a detection of a crossing of the Kármán line by the portable object according to any one of claims 7 to 12.

17. Portable object (2) according to claim 16, **characterised in that** the angular velocity sensor (10) is formed by a microelectromechanical system (MEMS).

18. Portable object (2) according to any of claims 14 to 17, **characterised in that** the portable object is a watch (2).

# Fig. 1

# Fig. 2

# Fig. 3

# Fig. 4

# Fig. 5

# Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008130418 A1
- WO 2021213640 A1

- CH 711684 A2